# EUROPÄISCHE PATENTANMELDUNG

(11) **EP 3 939 822 A1**
(43) Veröffentlichungstag der Anmeldung: **19.01.2022**
(21) Anmeldenummer: 21184265.3
(22) Anmeldetag: 07.07.2021
(51) Int. Cl.: B60L 53/10, B60L 53/302, H01B 7/42

(54) **LADELEITUNG FÜR EIN ELEKTROFAHRZEUG**

(30) Priorität: 17.07.2020 DE 102020208965
(71) Anmelder: ContiTech Techno-Chemie GmbH, 61184 Karben (DE)
(72) Erfinder: Linzmaier, Markus, 30419 Hannover (DE); Kiel, Christian, 30419 Hannover (DE); Daniel, Gunther, 30419 Hannover (DE)
(74) Vertreter: Continental Corporation

(57) **Zusammenfassung**

Die Erfindung betrifft eine Ladeleitung (3) für ein Elektrofahrzeug, wobei die Ladeleitung (3) eine Mehrzahl von Strom- und Fluidleitungssträngen (4 - 10) umfasst. Der Erfindung lag die Aufgabe zugrunde, eine Ladeleitung (3) für ein Elektrofahrzeug zu schaffen, bei der die umfassten Strom- und Fluidleitungsstränge (4 - 10) in ihrer Position relativ zueinander verbleiben, auch wenn die Ladeleitung (3) bewegt wird. Diese Aufgabe wird dadurch gelöst, dass die Ladeleitung (3) mindestens einen ersten (1) und mindestens einen zweiten (2) Schutz- und Stützkörper aufweist, die jeweils als längliches Profil aus jeweils mindestens einem elastomeren Material ausgebildet sind, wobei jedes Profil in Längsrichtung des Schutz- und Stützkörpers (1, 2) durchgehende Kavitäten (4 - 10) aufweist und die Schutz- und Stützkörper (1, 2) sich mindestens abschnittsweise über die Länge der Ladeleitung (3) erstrecken, wobei der erste und der zweite Schutz- und Stützkörper (1, 2) mittels einer in Längsrichtung verlaufenden Clipseinrichtung (11, 12) mindestens teilweise zu einem Verbund-Schutz- und Stützkörper zusammenclipsbar sind.

## Beschreibung

Die Erfindung betrifft eine Ladeleitung für ein Elektrofahrzeug, wobei die Ladeleitung eine Mehrzahl von Strom- und Fluidleitungssträngen umfasst.

Elektrofahrzeuge beziehen ihren Strom derzeit vorwiegend aus Akkumulatoren die intermittierend aufgeladen werden müssen. Um die Ladezeiten zu verkürzen, ist es vorteilhaft, hohe Ladeströme zu verwenden. Nachteilig dabei ist, dass die elektrischen Leitungen dabei mehr oder weniger stark erwärmt werden.

Um trotzdem hohe Ladeströme einsetzen zu können, ohne dass die elektrischen Kabel zu dick sind und ohne sie zu überhitzen, ist es üblich, die Ladeleitungen zu kühlen. Dabei werden neben den elektrischen Leitungssträngen und den gegebenenfalls weiter vorhandenen Steuerleitungen auch Fluidleitungsstränge zu Ladeleitungen zusammengefasst, wobei durch die Fluidleitungsstränge entsprechende Kühlfluide hindurchleitbar sind.

Für eine gute Wärmeübertragung ist es erforderlich, die elektrischen Leitungsstränge mit den Fluidleitungssträngen optimal zu koppeln. Über die gesamte Länge der Ladeleitungen können sich die zusammengefassten Leitungsstränge jedoch gegeneinander verschieben und verdrehen, wobei die optimale Kupplung nicht immer gewährleistet ist.

In der US 2015 200 17 54 A1 ist ein entsprechendes Ladesystem offenbart. Die Strom, Signale oder Kühlfluid führenden Leitungsstränge werden an den jeweiligen Enden des Systems, also einerseits an der Stromversorgung, andererseits an dem Stecker zum Fahrzeug mit einer Vorrichtung gehalten, um mit den notwendigen Kontakten, Fluidanschlüssen oder Rückführungsvorrichtungen verbunden zu werden.

Im wesentlichen Verlauf des Systems verlaufen die Leitungsstränge jedoch in einer mehr oder weniger freien Anordnung zueinander, sodass auch hier eine optimale Wärmeübertragung nicht immer gegeben ist.

Der Erfindung lag die Aufgabe zugrunde, eine Ladeleitung für ein Elektrofahrzeug zu schaffen, mit der die genannten Nachteile verhindert, zumindestens aber minimiert.

Diese Aufgabe wird dadurch gelöst, dass die Ladeleitung mindestens einen ersten und mindestens einen zweiten Schutz- und Stützkörper aufweist, die jeweils als längliches Profil aus jeweils mindestens einem elastomeren Material ausgebildet sind, wobei jedes Profil in Längsrichtung des Schutz- und Stützkörpers durchgehende Kavitäten aufweist und die Schutz- und Stützkörper sich mindestens abschnittsweise über die Länge der Ladeleitung erstrecken, wobei der erste und der zweite Schutz- und Stützkörper mittels einer in Längsrichtung verlaufenden Clipseinrichtung mindestens teilweise zu einem Verbund-Schutz- und Stützkörper zusammenclipsbar sind.

Derartig ausgebildete Schutz- und Stützkörper haben den Vorteil, dass die einzelnen Leitungsstränge zueinander geführt sind und in der durch die Anordnung der Kavitäten vorgegebenen Lage zueinander verbleiben, auch wenn die Ladeleitung bewegt wird. Durch die zwei separaten Schutz- und Stützkörper lassen sich Ladeleitungen quasi aus einem Baukasten modular aufbauen.

In einer Weiterbildung der Erfindung sind die elastomeren Materialien thermoplastische Elastomere.

Thermoplastische Elastomere haben den Vorteil, dass eine nachrangige Vulkanisation nicht erforderlich ist.

In einer Weiterbildung der Erfindung ist das elastomere Material des ersten Schutz- und Stützkörpers von dem elastomeren Material des zweiten Schutz- und Stützkörpers verschieden.

Eine derartige Anordnung ermöglicht eine gute Abstimmung auf verschiedene Anforderungen an die Eigenschaften des Elastomermaterials. So lassen sich beispielsweise den zulaufenden Leitungssträngen andere Materialien zuordnen als den rücklaufenden Leitungssträngen.

In einer Weiterbildung der Erfindung weist jede Kavität der Schutz- und Stützkörper über ihre gesamte Länge einen Längsschlitz auf, der durch das elastomere Material des jeweiligen Schutz- und Stützkörpers hindurch verläuft und die jeweilige Kavität mit der Umgebung außerhalb des Schutz- und Stützkörpers verbindet.

Diese Anordnung hat den Vorteil, dass die entsprechenden Leitungsstränge separat in die Kavitäten des Schutz- und Stützkörpers einlegbar sind.

In einer Weiterbildung der Erfindung sind die Schutz- und Stützkörper mittels Extrusion des elastomeren Materials erzeugt.

Die Extrusion ermöglicht eine kontinuierliche Fertigung, wobei sowohl die Kavitäten als auch die optional vorhandenen Längsschlitze einfach erzeugbar sind.

In einer Weiterbildung der Erfindung ist das Elastomermaterial durch Aufschäumen erzeugt.

Das Aufschäumen sorgt bei stabilem Aufbau für ein besonders geringes Gewicht.

In einer Weiterbildung der Erfindung sind die Schutz- und Stützkörper im 2K-Spritzgussverfahren aus mindestens zwei Elastomermaterialien hergestellt, wobei die Elastomermaterialien voneinander verschieden sein können.

Mit einem 2K-Spritzguss lassen sich beispielsweise Materialien verschiedener Wärmeleitfähigkeiten oder anderer Materialeigenschaften besonders einfach herstellen. So sind auch innerhalb des jeweiligen Schutz- und Stützkörpers die Eigenschaften des Elastomermaterials auf die jeweiligen Anforderungen anpassen.

In einer Weiterbildung der Erfindung sind die Schutz- und Stützkörper der Ladeleitung in Verbindung mit den Leitungssträngen als Verbund ausgebildet.

Auf diese Weise weisen, beispielsweise mittels eines Querspritzkopfes hergestellt, die jeweiligen Schutz- und Stützkörper bereits nach der Extrusion die zugeordneten Leitungsstränge auf.

In einer Weiterbildung der Erfindung weist der Verbund aus den Schutz- und Stützkörpern mit den eingebetteten Leitungssträngen eine die Schutz- und Stützkörper umfassende Schutzumhüllung auf.

Diese Schutzumhüllung kann schlauchartig aufgebaut sein und schützt den Verbund aus den beiden Schutz- und Stützkörpern vor Beschädigungen und äußeren Einflüssen.

Anhand der Zeichnung wird nachstehend ein Beispiel der Erfindung näher erläutert. Es zeigt
Fig. 1 einen Querschnitt durch 2 erfindungsgemäße Schutz- und Stützkörper und
Fig. 2 einen Querschnitt durch eine fertige erfindungsgemäße Ladeleitung.

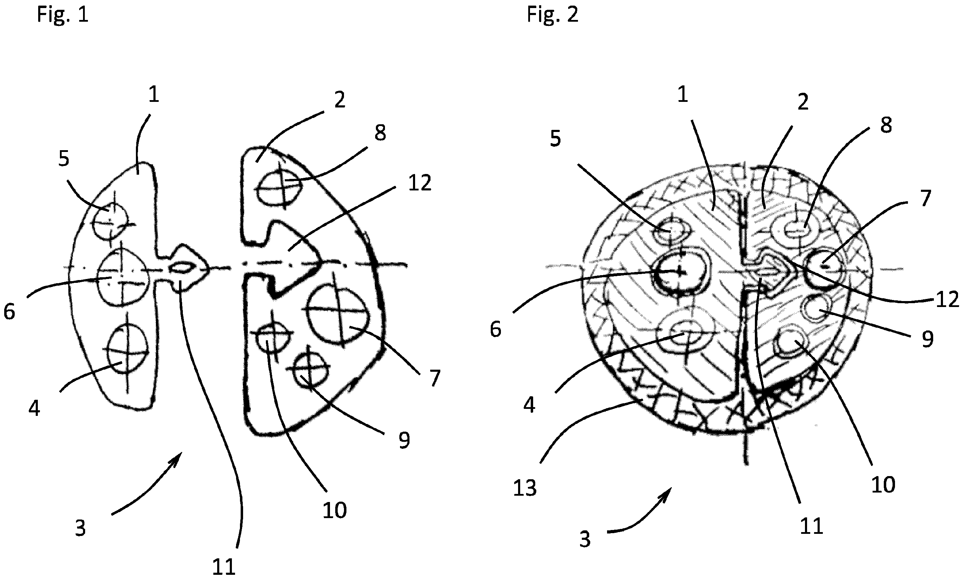

Die Fig. 1 zeigt einen Querschnitt durch einen ersten Schutz- und Stützkörper 1 und einen zweiten Schutz- und Stützkörper 2 einer erfindungsgemäßen Ladeleitung 3. Beide Schutz- und Stützkörper 1, 2 sind aus einem thermoplastischen Elastomer mittels eines Querspritzkopfes extrudiert. Der erste Stützkörper 1 umfasst dabei zwei elektrische Leiter 4 und 5 sowie eine Kühlmittelleitung 6. die beiden elektrischen Leiter 4 und 5 bilden zusammen einen Stromkreis, der zur Aufladung eines hier nicht gezeigten Akkus eines ebenfalls nicht gezeigten Elektrofahrzeugs vorgesehen ist. Die Kühlmittelleitung 6 dient als Zufuhr eines hier nicht gezeigten Kühlmittels.

Die elektrischen Leiter 4 und 5 sind mittels des Kühlmittels aus der Kühlmittelzuleitung 6 durch Wärmeübergang durch den ersten Schutz- und Stützkörper 1 gut kühlbar. Das thermoplastische Elastomer des ersten Schutz- und Stützkörpers 1 weist dazu eine gute Wärmeleitfähigkeit auf, um die Kühlung der elektrischen Leiter 4 und 5 optimal zu gewährleisten.

Der zweite Schutz- und Stützkörper 2 weist eine Kühlmittelrückleitung 7 sowie einen Masseleiter 8 und zwei Steuerleitungen 9 und 10 auf. Die Kühlmittelrückleitung 7 bildet mit Kühlmittelzuleitung 6 im ersten Schutz- und Stützkörper 1 einen Kühlmittelkreislauf, wobei die Kühlmittelrückleitung 7 als Rückführleitung für das Kühlmittel vorgesehen ist. Das thermoplastische Elastomer des zweiten Schutz- und Stützkörpers 2 weist dazu eine geringe Wärmeleitfähigkeit auf, damit das erwärmte Kühlmittel in der Kühlmittelrückleitung 7 die im zweiten Schutz- und Stützkörper 2 angeordneten Masse- und Steuerleitungen 8, 9 und 10 nicht unnötig erwärmt.

Der erste Schutz- und Stützkörper 1 weist an seinem dem zweiten Schutz- und Stützkörper 2 zugeordnet Abschnitt eine vorspringende Rastleiste 11 auf, die sich über die gesamte axiale Länge des ersten Schutz- und Stützkörpers 1 erstreckt und mit einer Rastnut 12 des zweiten Schutz- und Stützkörpers 2 korrespondiert.

In der Fig. 2 ist ein Querschnitt einer fertigen erfindungsgemäßen Ladeleitung 3 gezeigt. Die beiden Schutz- und Stützkörper 1 und 2 mit den eingebetteten Leitungssträngen 4 - 10 bilden durch die Einrastung der Rastleiste 11 in die Rastnut 12 einen Verbund, der durch eine die Schutz- und Stützkörper 1 und 2 umgebende Schutzhülle 13 zusammengehalten und vor Umwelteinflüssen geschützt ist. Durch die unterschiedlichen Wärmeleitfähigkeiten der Schutz- und Stützkörper 1 und 2, die durch die Teilung in 2 separate Körper relativ leicht herstellbar ist, ist jeder Schutz- und Stützkörper 1 oder 2 für seine jeweilige vorgesehene Aufgabe optimal geeignet.

### Bezugszeichenliste

### (Teil der Beschreibung)

- 1: erster Schutz- und Stützkörper
- 2: zweiter Schutz- und Stützkörper
- 3: Ladeleitung
- 4, 5: elektrische Leitungen, Ladestrang
- 6: Kühlmittelzuleitung, Kühlmittelstrang
- 7: Kühlmittelrückleitung, Kühlmittelstrang
- 8: Masseleitung, Massestrang
- 9, 10: Steuerleitungen, Steuerstränge
- 11: Rastleiste des Schutz- und Stützkörpers 1
- 12: Rastnut des Schutz- und Stützkörpers 2
- 13: Schutzhülle

## Patentansprüche

1. Ladeleitung (3) für ein Elektrofahrzeug, wobei die Ladeleitung (3) eine Mehrzahl von Strom- und Fluidleitungssträngen (4 - 10) umfasst, **dadurch gekennzeichnet, dass** die Ladeleitung (3) mindestens einen ersten (1) und mindestens einen zweiten (2) Schutz- und Stützkörper aufweist, die jeweils als längliches Profil aus jeweils mindestens einem elastomeren Material ausgebildet sind, wobei jedes Profil in Längsrichtung des Schutz- und Stützkörpers (1, 2) durchgehende Kavitäten (4 - 10) aufweist und die Schutz- und Stützkörper (1, 2) sich mindestens abschnittsweise über die Länge der Ladeleitung (3) erstrecken, wobei der erste und der zweite Schutz- und Stützkörper (1, 2) mittels einer in Längsrichtung verlaufenden Clipseinrichtung (11, 12) mindestens teilweise zu einem Verbund-Schutz- und Stützkörper zusammenclipsbar sind.

2. Ladeleitung (3) nach Anspruch 1, **dadurch gekennzeichnet, dass** die elastomeren Materialien thermoplastische Elastomere sind.

3. Ladeleitung (3) nach Anspruch 1 oder 2, **dadurch gekennzeichnet, dass** das elastomere Material des ersten Schutz- und Stützkörpers (1) von dem elastomeren Material des zweiten Schutz- und Stützkörpers (2) verschieden ist.

4. Ladeleitung (3) nach Anspruch 1, 2 oder 3, **dadurch gekennzeichnet, dass** jede Kavität (4 - 10) der Schutz- und Stützkörper (1, 2) über ihre gesamte Länge einen Längsschlitz aufweist, der durch das elastomere Material des jeweiligen Schutz- und Stützkörpers (1, 2) hindurch verläuft und die jeweilige Kavität (4 - 10) mit der Umgebung außerhalb des jeweiligen Schutz- und Stützkörpers (1, 2) verbindet.

5. Ladeleitung (3) nach mindestens einem der vorstehenden Ansprüche, **dadurch gekennzeichnet, dass** die Schutz- und Stützkörper (1, 2) mittels Extrusion des elastomeren Materials erzeugt sind.

6. Ladeleitung (3) nach mindestens einem der Ansprüche 1-5, **dadurch gekennzeichnet, dass** das Elastomermaterial durch Aufschäumen erzeugt ist.

7. Ladeleitung (3) nach mindestens einem der Ansprüche 1-5, **dadurch gekennzeichnet, dass** die Schutz- und Stützkörper (1, 2) im 2K-Spritzgussverfahren aus mindestens zwei Elastomermaterialien hergestellt sind , wobei die Elastomermaterialien voneinander verschieden sein können.

8. Ladeleitung (3) nach mindestens einem der vorstehenden Ansprüche, **dadurch gekennzeichnet, dass** die Schutz- und Stützkörper 1, 2) der Ladeleitung (3) in Verbindung mit den Leitungssträngen (4 - 10) als Verbund ausgebildet sind.

9. Ladeleitung (3) nach Anspruch 8, **dadurch gekennzeichnet, dass** der Verbund aus den Schutz- und Stützkörpern (1, 2) mit den eingebetteten Leitungssträngen (4 - 10) eine die Schutz- und Stützkörper (1, 2) umfassende Schutzumhüllung (13) aufweist.
